(19)

**Europäisches Patentamt**
**European Patent Office**
**Office européen des brevets**

(11) **EP 1 522 488 B1**

(12) **EUROPEAN PATENT SPECIFICATION**

(45) Date of publication and mention
of the grant of the patent:
**20.06.2007 Bulletin 2007/25**

(51) Int Cl.:
**B62D 37/04** (2006.01)

(21) Application number: **03023142.7**

(22) Date of filing: **10.10.2003**

(54) **Braking buffer and turning balance apparatus for motorcar**

Schleuderschutzvorrichtung an Kraftfahrzeugen

Dispositif antidérapant pour véhicules automobiles avec une masse d'inetie

(84) Designated Contracting States:
**AT BE BG CH CY CZ DE DK EE ES FI FR GB GR HU IE IT LI LU MC NL PT RO SE SI SK TR**

(43) Date of publication of application:
**13.04.2005 Bulletin 2005/15**

(73) Proprietor: **Pang, Yi-Hsung**
**Hsinchu 300 (TW)**

(72) Inventor: **Pang, Yi-Hsung**
**Hsinchu 300 (TW)**

(74) Representative: **TER MEER - STEINMEISTER & PARTNER GbR**
**Patentanwälte**
**Mauerkircherstrasse 45**
**81679 München (DE)**

(56) References cited:
**DE-C- 721 353**　　　**DE-C- 808 528**
**FR-A- 1 000 358**　　　**FR-A- 1 012 411**
**FR-A- 1 022 269**　　　**FR-A- 1 091 519**
**US-A- 2 155 130**　　　**US-A- 2 618 492**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the invention

The present invention relates to a motorcar including a braking buffer device.

Description of the Related Art

Generally the improvement of the braking system of a car such as Anti-lock Brake System (ABS), which prevents slipping caused by locking of the wheel, increases safety by preventing the steering wheel out of control. However, this anti-lock brake system is electrical and sensing system, still has its limit. This system has little contribution to decrease the braking distance. For the improvement of the safety during turning, such as differential gear, which makes difference rotation rates of the left wheel and the right wheel, such that turning will become smooth. The other improvements such as the soft seat, the seat belts, the handle beside the seat can also increase the safety and comfortable. All of these can not decrease the uncomfortable and dangerous cause by the push and centrifugal force during braking and turning.
What is needed is an improved mechanical device satisfied the need of comfortable and safety such that the uncomfortable feeling caused by the push when braking and unbalanced caused by the centrifugal force during turning can be decreased, and stable, comfortable, safety can be increased. It also need not use expensive and very accurate method to manufacture the device.
US 2,618,492 discloses an anti-skid device for auto motor vehicles in which a weight or load is arranged within a tube serving as guiding means for the load and being mounted transversely to the longitudinal axis of the auto motive vehicle and in parallel with the rear axle of the vehicle. Compression springs are located on either side of the load to keep the load symmetrically with regard to the longitudinal central plane of the vehicle. Thus, the load is compressing one spring and extending the other so that the momentum during turning is transferred to the springs, not to the vehicle.
FR 1,000,358 shows a similar device as US 2, 618,492. However, this device is installed in the front bumper of the vehicle. The compression spring has the tendency to keep the load or weight symmetrically with regard to the longitudinal central plane of the vehicle so that during turning the load compresses one spring and extends the other. Thus, the momentum is also transferred to the springs and not to the vehicle.

SUMMARY OF THE INVENTION

It is therefore an object of the invention to provide an improved braking buffer device for motorcar. The device will transfer the momentum temporary to a weighty drum when braking, this will decrease the pushed feeling of the driver and the customer, increasing the comfortable when braking.
It is another object of the invention to provide an improved braking buffer device for motorcar. By implement a simple mechanical device to decrease the braking distance, and increase safety when braking.
It is yet another object of the invention to provide an improved turning balance device for motorcar. The device will transfer the momentum of the outward centrifugal force temporary to a weighty drum when the car is turning, thus increases comfortable.
It is yet a further object of the invention to provide an improved turning balance device for motorcar. The device will decrease the radius of turning by decreasing the outward centrifugal force of the front wheel, and decrease the wear down of the tires, thus increasing safety of the driver and the passengers.
At least one of the objects is achieved by the motorcar according to claim 1.
Thus, the present invention teaches a motorcar with a braking buffer device having one braking buffer device installed at the left side and another one installed at the right side under the body of the car so that the momentum is temporarily transferred to a weighty drum when braking to decrease the braking distance and to increase the comfort and safety of the car.
In addition, according to claim 8, the motorcar of the present invention is further improved by a turning balance device transferring the momentum of the centrifugal force temporarily to a weighty drum when the car is turning, to decrease the centrifugal momentum of the front wheel, thus increases safety.

BRIEF DESCRIPTION OF THE DRAWINGS

The foregoing and other advantages of the invention will be more fully, understood with reference to the description of the best embodiment and the drawing wherein:

FIG. 1 is a schematic representation of the structure of a braking buffer device in according to one embodiment of the present invention.

FIG. 2 is a schematic representation of the position of the weighty drum in the instance after braking.

FIG. 3 is a schematic representation of the structure of a turning balance device in according to one embodiment of the present invention.

FIG. 4 is a schematic representation of the weighty drum slipping to the left due to the centrifugal force when the car turning to the right.

FIG.5 illustrates the example set up of two braking buffer devices and one turning balance device under the body of a car.

DESCRIPTION OF THE PREFERRED EMBODIMENTS

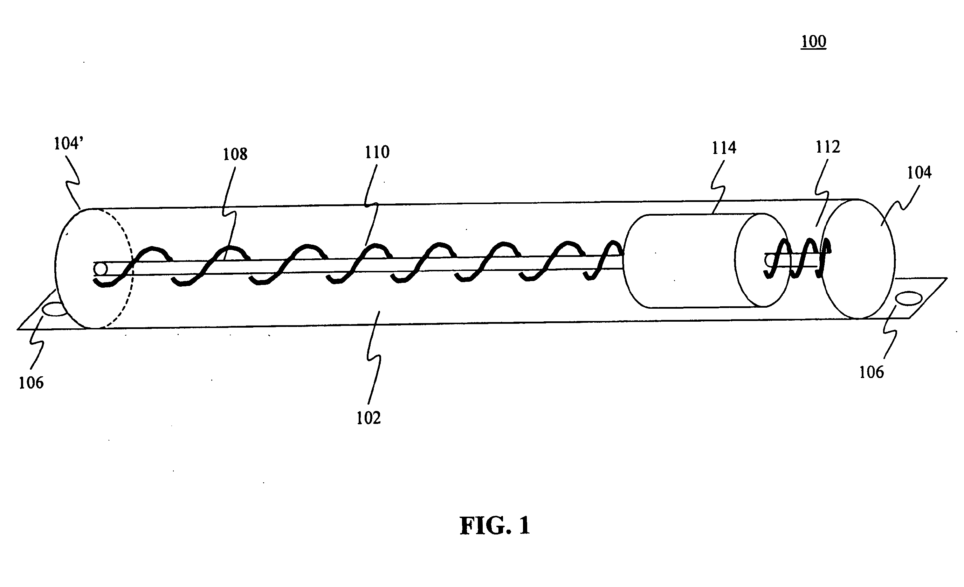

Referring to FIG.1, FIG.1 is a schematic representation of the structure of a braking buffer device 100 according to one embodiment of the present invention. Supporting frame 102 is a hollow cylinder, or other shapes compatible with the space of installation under the car, enable to support the momentum of the weighty drum 114 and the counter force of the spring 110, and generally to be stainless steel or plastic. Two fitting screw holes 106 on both ends are used to fix the support frame on the body of a car. Every car generally installs two set of braking buffer 100 on the left and the right sides. Front end plate 104' and rear end plate 104 are fixed on the two sides of the supporting frame 102 to support the guiding axis 108, The weighty drum 114, the recover spring 110 and the buffer spring 112 are guiding by the guiding axis 108. The recover spring releases potential energy after braking is completed, which takes the drum 114 to recover its original position. The recover spring 110 can be replaced by pneumatic. The buffer spring 112 can be replaced by a elastic rubber. The guiding axis go through the sliding hole of the weighty drum such that the weighty drum can slide along it, and will slide forward along the arrow 116 by inertia during braking. Assume that the mass of the drum is m, the velocity of the car is $v_1$, the momentum when braking is then:

$$\text{Momentum of the weighty drum} = mv_1 \qquad (1)$$

At this time, the car is braking, the velocity of the car decreases to $v_2$, where $v_2 < v_1$, assume that the mass of the car is M, the momentum changed is then:

$$\text{Momentum changed} = Mv_1 - Mv_2 = M(v_1 - v_2) \qquad (2)$$

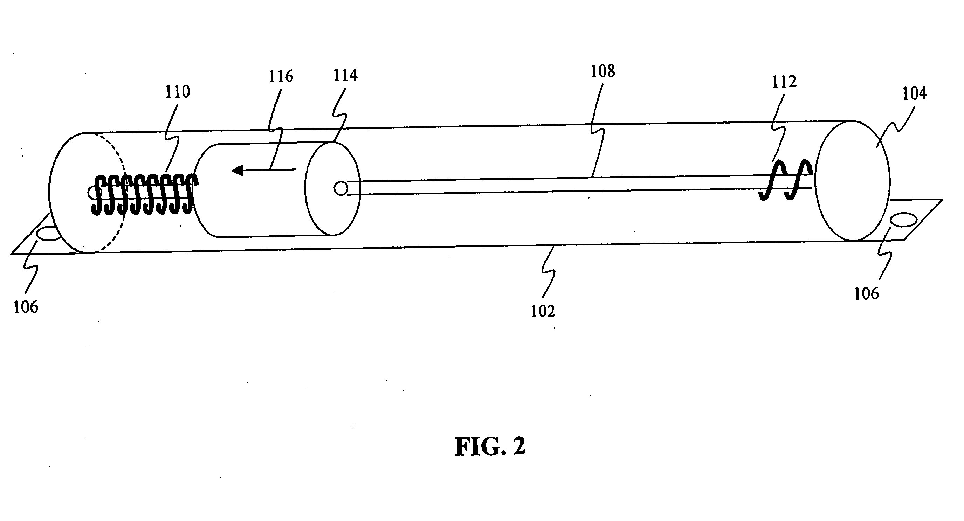

The change of momentum makes the driver and the passengers feel a pushing, part of the momentum change to the momentum of the weighty drum, thus decreases the push felt by the driver and the passengers. Until braking is completed, the momentum of the weighty drum is struck against the car and changed to part of the momentum of the car (part of the momentum changes to potential energy) through the spring and the body of the car. However, by this time, the braking is already completed, the strike is not essential to the driver and the passengers. Now the weighty drum stops on the front-end position, as shown in FIG.2. FIG. 2 is a schematic representation of the position of the weighty drum in the instance after braking. One can see in FIG.2, that the recover spring 110 is compressed and storing potential energy, but the buffer spring 112 still in its original position because it does not connect with the weighty drum. Once the weighty drum 114 approaches the far front end of the rear end plate 104, the weighty drum 114 is pushed back to its original position by the recover spring 110, as shown in FIG.1. When the weighty drum 114 approaches the far front end of the rear end plate 104, the motorcar may still be moving forward, and braking is still in progress. The action of pushing back the weighty drum 114 to its original position by the recover spring 110 causes the weighty drum 114 shoot off backward and touch the rear end plate 104 As a result the motorcar receives a backward force that help braking, so that the speed of the car decreases and helps braking. The shape of the weighty drum is the same as the supporting frame, it may be round shaped or other shapes to match the shape of the supporting frame, i.e. to match the shape of the installing space. More mass in the weighty drum is preferred and depends on the size of the car. In order to decrease the volume of the weighty drum, it is preferred to use lead. Additionally, stainless steel or iron could be used to decrease pollution.

Each one of the braking buffer devices for motorcar is installed on the left and the right side. In one embodiment, the braking buffer devices are installing longitudinally and horizontally at the left side and another one at the right side under the body of a car. In another embodiment, the braking buffer devices are installing longitudinally and tilt the front end 1° to 4° downwardly at the left side and another one at the right side under the body of a car, thus the weighty drum will produce a downward component of force on the front and the rear wheel, but most of the force is applied to the front wheel, which increases the grasp on the ground firmly and increases frictional force of the four wheels, thus preventing slipping of the four wheels, this also a help to decrease the braking distance. In emergency braking, the weighty drum pressing downwardly and forwardly, this may decrease the possibility of turn over and increase the safety of the car, especially in turning. The weigh of the weighty drum may also increase the stability and is hard to turn over. Furthermore, there are two braking buffer devices installed on both side, the weigh of the braking buffer device is installed at the lowest position from the ground, thus enforces the stability when emergency braking during turning, so decreases the possibility of turn over of the car.

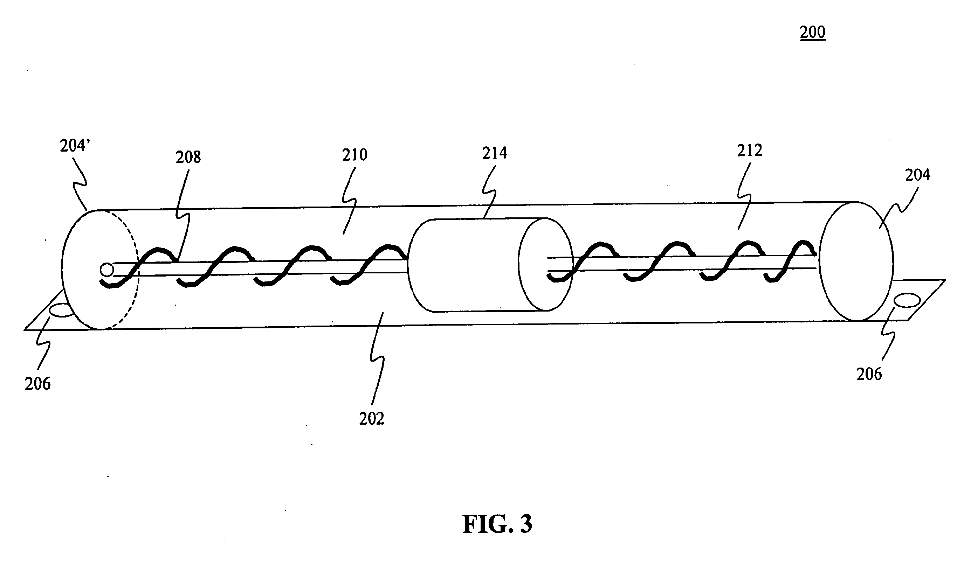

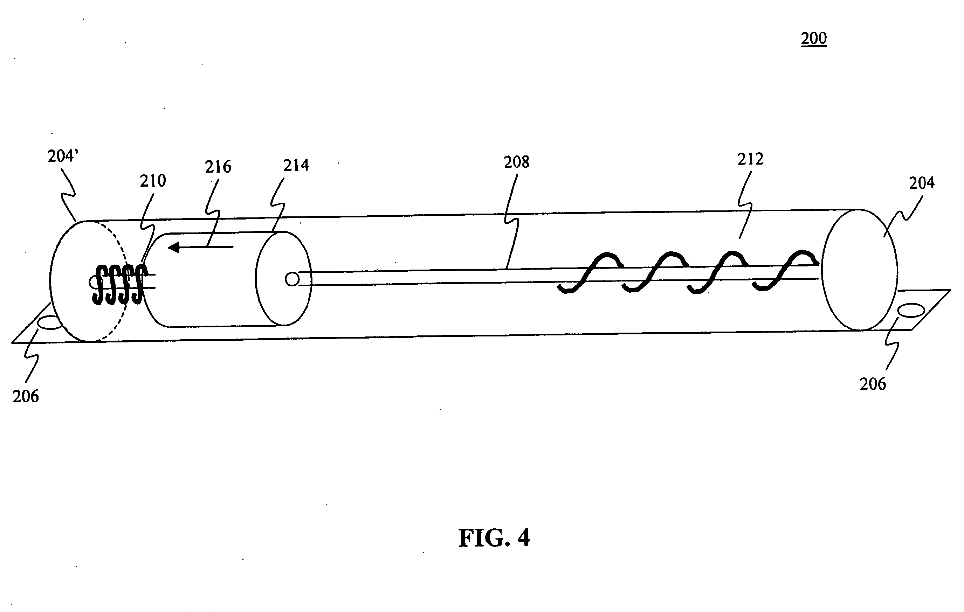

FIG. 3 is a schematic representation of the structure of a turning balance device in according to one embodiment of the present invention. The turning balance device 200 is different from the braking buffer device 100 by the weighty drum 214, which is put in the central position of the turning balance device 200, and there are recover spring 210 and 212 on either side, supporting frame 202 is fixed transversely on the rear part of the body under the trunk or in the rear bumper. The larger the distance from the front axis of the wheel to the weighty drum 214, the better left end plate 204' and right end plate 204 are fixed on the two sides of the supporting frame 202 to support the guiding axis 208, The weighty drum 214, recover spring 210 and 212. The guiding axis 208 goes through the sliding hole of the weighty drum 214 such that the weighty drum 214 can slide along it to the left side or the right side, for example, when turn to the right, refer to FIG.4, FIG. 4 is a schematic representation of the weighty drum slipping to the left due to the centrifugal force when the car turning to the right. Assume that the mass of the weighty drum is m, when accelerates to a speed of $v_3$, the momentum will be:

$$\text{Momentum} = mv_3 \qquad (3)$$

Since the left front tire has frictional force with the ground, the outward speed is nearly zero. But if the centrifugal force is too large, the frictional force is smaller than the centrifugal force, then the front tire will slip outwardly and forwardly. This will increase the turning radius, the momentum of slipping is $ft = Mv_4$, where f is the centrifugal force, t is the time of slipping, M is the mass of the car and $v_4$ is the average speed of slipping, then the momentum of slip is $Mv_4$. But if the weighty drum sliding to the left side freely, due to no frictional force, its velocity $v_3$ is larger than the slipping velocity $v_4$ of the car, thus the momentum is transferred temporarily to the weighty drum, and the momentum $ft = mv_4$ is absorbed by the body when the weighty drum reaches the left end, and an outward force $f = mv_4 / t$ is produced, this force produces a torque to assist the car to rotate toward the turning direction, and the front tire would not slip outwardly and forwardly, thus decreasing the radius of turning, and decreasing the wear of the tires. Also, the balance and safety of the driver and the car are increased. It also decreases tilting, so increases the comfort of the passengers. When the turning is completed, the weighty drum 214 is blocked by the left end plate and the right end plate and momentum is released and transformed to a pushing force, but in this time, turning has been completed. This pushing is not important to the driver and the passengers. Now the weighty drum stop on the left end position, as shown in FIG.4. The left recovered spring 210 is compressed and potential energy is stored, but the right recovered spring 212 is still in its original position, since the recover springs do not connect with the weighty drum. Once turning is completed, the recover spring 210 will push the weighty drum to its original position, as shown in FIG.3. For left turn, the weighty drum 214 will slide to the right. The operation is the reversal of FIG.4.

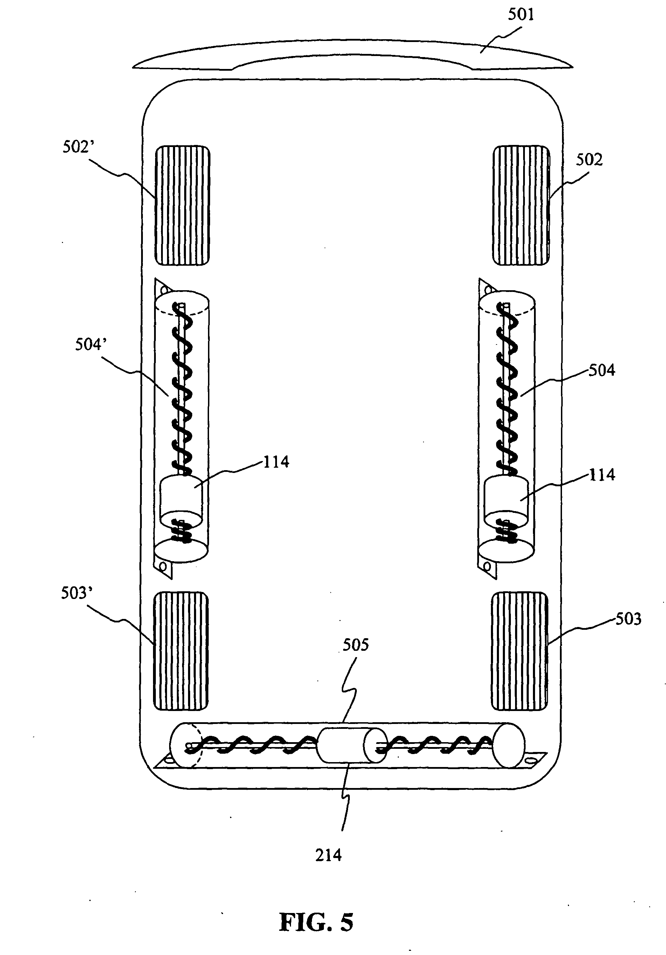

FIG.5 illustrates the example set up of the two braking buffer devices and one turning balance device under the body of a car. One of the braking buffer device 504 is installed between the right front tire 502 and the right rear tire 503 longitudinally. Another braking buffers device 504' is installed between the left front tire 502' and the left rear tire 503' longitudinally. The turning balance device 505is installed behind and under the trunk transversely, as shown in FIG.5.

Although specific embodiments of the invention have been disclosed, it will be understood by those having skill in the art that minor changes can be made to the form and details of the specific embodiments disclosed herein, without departing from the spirit and the scope of the invention. The embodiments presented above are for purposes of example only and are not to be taken to limit the scope of the appended claims.

**Claims**

1.   A motorcar including a braking buffer device comprising one braking buffer device (100; 504')at the left side and another one (100; 504) at the right side under the body of the car, each device comprising:

   - a supporting frame (102), fixed by a fixing mechanism longitudinally under the body of the car between a front wheel (502', 502) and a rear wheel (503'. 503);
- front and rear end plates (104', 104), fixed on the two end of the supporting frame (102),
- a guiding axis (108) supported by the front and rear end plates,
- a weighty drum (114), slidingly guided along the guiding axis (108) for temporarily absorbing momentum when braking to decrease the braking distance;
- a recover spring (110) guided by the guiding axis (108) for recovering the original position of the weighty drum (114); and
- a buffer spring (112), for buffering and noise absorption during the recovering of the recover spring (110).

2. A motorcar as recited in claim 1, wherein the buffer spring (110) of the braking buffer device (100) is replaced by elastic rubber.

3. A motorcar as recited in claim 1, wherein the buffer spring (110) of the braking buffer device (100) is replaced by pneumatic.

4. A motorcar as recited in claim 1, wherein the weighty drum (114) is made with high density metal.

5. A motorcar as recited in claim 1, wherein the braking buffer devices (100: 504', 504) are installed longitudinally and horizontally one (504') at the left side and the other (504) at the right side under the body of the car.

6. A motorcar as recited in claim 1, wherein the braking buffer devices are installed longitudinally and tilt the front end 1° to 4° one (504') at the left side and the other (504) at the right side under the body of the car.

7. A motorcar as recited in claim 1, wherein the recover spring (110) is replaced by air pressure.

8. A motorcar as recited in claim 1, further comprising a turning balance device having:

- a supporting frame (202), fixed by a fixing mechanism transversely under the body of the car near a trunk,
- left and right end plates (204', 204), fixed on the two ends of the supporting frame (202) for supporting a guiding axis (208);
- a weighty drum (214), slidingly guided along the guiding axis (208) for temporarily absorbing the momentum of the centrifugal force when the car is turning; and
- a left and a right recover spring (210, 212), for recovering the original position of the weighty drum (214).

9. A motorcar as recited in claim 8, wherein the recover springs (210, 212) of the turning balance device are replaced by pneumatic.

10. A motorcar as recited in claim 8, wherein the turning balance device is installing inside the rear bumper.

11. A motorcar as recited in claim 8, wherein the weighty drum (214) is made with high density metal.

**Patentansprüche**

1. Motorfahrzeug, das eine Bremspuffervorrichtung enthält, die eine Bremspuffervorrichtung (100; 504') auf der linken Seite und eine weitere Bremspuffervorrichtung (100; 504) auf der rechten Seite unter der Karosserie des Fahrzeugs umfasst, wobei jede Vorrichtung umfasst:

- einen Unterstützungsrahmen (102), der durch einen Befestigungsmechanismus in Längsrichtung unter der Karosserie des Fahrzeugs zwischen einem Vorderrad (502', 502) und einem Hinterrad (503', 503) befestigt ist;
- eine vordere und eine hintere Stirnplatte (104', 104), die an den beiden Enden des Unterstützungsrahmens (102) befestigt sind,
- eine Führungswelle (108), die durch die vordere und durch die hintere Stirnplatte unterstützt ist,
- eine schwere Trommel (114), die längs der Führungswelle (108) gleitend geführt wird, um Bewegungsenergie während des Bremsens temporär zu absorbieren, um den Bremsweg zu verringern;
- eine Rückstellfeder (110), die durch die Führungswelle (108) geführt wird, um die ursprüngliche Position der schweren Trommel (114) wieder herzustellen; und
- eine Pufferfeder (112) für eine Pufferung und eine Geräuschabsorption während des Wiederherstellens durch die Rückstellfeder (110).

2. Motorfahrzeug nach Anspruch 1, bei dem die Pufferfeder (110) der Bremspuffervorrichtung (100) durch elastischen Gummi ersetzt ist.

3. Motorfahrzeug nach Anspruch 1, bei dem die Pufferfeder (110) der Bremspuffervorrichtung (100) durch Druckluft ersetzt ist.

4. Motorfahrzeug nach Anspruch 1, bei dem die schwere Trommel (114) aus einem Metall hoher Dichte hergestellt ist.

5. Motorfahrzeug nach Anspruch 1, bei dem die Bremspuffervorrichtungen (100; 504', 504) longitudinal und horizontal so installiert sind, dass sich eine (504') auf der linken Seite und die andere (504) auf der rechten Seite unter der Karosserie des Fahrzeugs befindet.

6. Motorfahrzeug nach Anspruch 1, bei dem die Bremspuffervorrichtungen longitudinal so installiert sind, dass das vordere Ende einer (504') von innen auf der linken Seite und der anderen (504) auf der rechten Seite unter der Karosserie des Fahrzeugs um 1° bis 4° geneigt ist.

7. Motorfahrzeug nach Anspruch 1, bei dem die Rückstellfeder (110) durch Luftdruck ersetzt ist.

8. Motorfahrzeug nach Anspruch 1, das ferner eine Kurvenfahrt-Ausgleichsvorrichtung aufweist, die umfasst:

   - einen Unterstützungsrahmen (202), der durch einen Befestigungsmechanismus quer unter der Karosserie des Fahrzeugs in der Nähe eines Kofferraums befestigt ist,
   - eine linke und eine rechte Stirnplatte (204', 204), die an den beiden Enden des Unterstützungsrahmens (202) befestigt sind, um eine Führungswelle (208) zu unterstützen;
   - eine schwere Trommel (214), die längs der Führungswelle (208) gleitend geführt wird, um die Bewegungsenergie der Zentrifugalkraft temporär zu absorbieren, wenn das Fahrzeug um eine Kurve fährt; und
   - eine linke und eine rechte Rückstellfeder (210, 212), um die ursprüngliche Position der schweren Trommel (214) wieder herzustellen.

9. Motorfahrzeug nach Anspruch 8, bei dem die Rückstellfedern (210, 212) der Kurvenfahrt-Ausgleichsvorrichtung durch Druckluft ersetzt sind.

10. Motorfahrzeug nach Anspruch 8, bei dem die Kurvenfahrt-Ausgleichsvorrichtung in der hinteren Stoßstange installiert ist.

11. Motorfahrzeug nach Anspruch 8, bei dem die schwere Trommel (214) aus einem Metall hoher Dichte hergestellt ist.

**Revendications**

1. Voiture automobile incluant un dispositif amortisseur de freinage comprenant un dispositif amortisseur de freinage (100 ; 504') au niveau du côté gauche et un autre (100 ; 504) au niveau du côté droit situés sous la caisse du véhicule, chaque dispositif comprenant :

   - un bâti de support (102), fixé longitudinalement par un mécanisme de fixation sous la caisse du véhicule entre une roue avant (502', 502) et une roue arrière (503', 503) ;
   - des plaques d'extrémité avant et arrière (104', 104), fixées sur les deux extrémités du bâti de support (102),
   - un axe de guidage (108) supporté par les plaques d'extrémité avant et arrière,
   - un tambour lourd (114), guidé en coulissement le long de l'axe de guidage (108) pour absorber temporairement la quantité de mouvement lors d'un freinage afin de diminuer la distance de freinage ;
   - un ressort de récupération (110) guidé par l'axe de guidage (108) pour récupérer la position originale du tambour lourd (114) ; et
   - un ressort amortisseur (112), pour l'amortissement et l'absorption du bruit au cours de la récupération du ressort de récupération (110).

2. Véhicule automobile selon la revendication 1, dans lequel le ressort amortisseur (110) du dispositif amortisseur de freinage (100) est remplacé par un caoutchouc élastique.

3. Véhicule automobile selon la revendication 1, dans lequel le ressort amortisseur (110) du dispositif amortisseur de freinage (100) est remplacé par un système pneumatique.

4. Véhicule automobile selon la revendication 1, dans lequel le tambour lourd (114) est réalisé dans un métal à haute densité.

5. Véhicule automobile selon la revendication 1, dans lequel les dispositifs amortisseurs de freinage (100 ; 504', 504) sont installés longitudinalement et horizontalement, l'un (504') au niveau du côté gauche et l'autre (504) au niveau du côté droit, sous la caisse du véhicule.

6. Véhicule automobile selon la revendication 1, dans lequel les dispositifs amortisseurs de freinage sont installés longitudinalement, et dont l'extrémité avant est inclinée de 1 ° à 4°, l'un (504') au niveau du côté gauche et l'autre (504) au niveau du côté droit, sous la caisse du véhicule.

7. Véhicule automobile selon la revendication 1, dans lequel le ressort de récupération (110) est remplacé par une pression d'air.

8. Véhicule automobile selon la revendication 1, comprenant en outre un dispositif d'équilibrage de virage ayant :

   - un bâti de support (202), fixé transversalement par un mécanisme de fixation sous la caisse du véhicule à proximité d'un coffre à bagages,
   - des plaques d'extrémité gauche et droite (204', 204), fixées sur les deux extrémités du bâti de support (202) pour supporter un axe de guidage (208) ;
   - un tambour lourd (214), guidé en coulissement le long de l'axe de guidage (208) pour absorber temporairement la quantité de mouvement de la force centrifuge lorsque le véhicule tourne ; et
   - des ressorts de récupération gauche et droit (210, 212), pour récupérer la position originale du tambour lourd (214).

9. Véhicule automobile selon la revendication 8, dans lequel les ressorts de récupération (210, 212) du dispositif d'équilibrage de virage sont remplacés par un système pneumatique.

10. Véhicule automobile selon la revendication 8, dans lequel le dispositif d'équilibrage de virage est installé à l'intérieur du pare-chocs arrière.

11. Véhicule automobile selon la revendication 8, dans lequel le tambour lourd (214) est réalisé dans un métal à haute densité.

**FIG. 1**

EP 1 522 488 B1

**FIG. 2**

EP 1 522 488 B1

**FIG. 3**

EP 1 522 488 B1

200

204'    210    216    214                    208              212          204

206                                                                              206

**FIG. 4**

EP 1 522 488 B1

**FIG. 5**

EP 1 522 488 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2618492 A
- FR 1000358